# EUROPEAN PATENT APPLICATION

(11) **EP 2 720 492 A1**
(43) Date of publication of application: **16.04.2014**
(21) Application number: 13185407.7
(22) Date of filing: 20.09.2013
(51) Int. Cl.: H04W 36/00, H04L 29/06, H04B 7/185

(54) **Systems and methods for a dialog service interface switch**

(30) Priority: 10.10.2012 US 201213648411
(71) Applicant: Honeywell International Inc., Morristown, NJ 07962-2245 (US)
(72) Inventor: Toth, Louis T., Morristown, NJ New Jersey 07962-2245 (US); Anandappan, Thanga, Morristown, NJ New Jersey 07962-2245 (US); Roy, Aloke, Morristown, NJ New Jersey 07962-2245 (US); Chakroborty, Showvik, Morristown, NJ New Jersey 07962-2245 (US)
(74) Representative: Houghton, Mark Phillip

(57) **Abstract**

Systems and methods for a dialog service interface switch are provided. In at least one embodiment, a system comprises a plurality of networks configured to enable communication transmissions from the mobile communication system to an end node, wherein at least two networks of the plurality of networks transports information through different protocol stacks that implement different protocol suites and a dialog service interface switch coupled to the plurality of networks. The system also comprises an application interface coupled to the dialog service interface switch, wherein the dialog service interface switch comprises a network selector that determines a network of the plurality of networks through which the mobile communication system will communicate and switches between different networks of the plurality of networks, wherein the application interface provides data to at least one application, executing in the application layer, in the same format for each network of the plurality of networks.

## Description

### BACKGROUND

There are multiple different protocol suites that can be followed when different end nodes communicate with one another across a network. For example, the protocol suites can include the Aeronautical Telecommunications Network (ATN) communications protocol suite, which uses the Open Systems Interconnection (OSI) seven-layer reference model, a Transmission Control Protocol/Internet Protocol (TCP/IP) protocol suite, and the like. At times, different geographic regions provide separate networks that include protocol stacks that follow the definitions of different protocol suites.. For example, a protocol stack for a first network in a first region implements the ATN/OSI protocol suite and a protocol stack for a second network in a second region implements both the ATN/OSI and the TCP/IP protocol suites, while a third network in a third region only implements the TCP/IP protocol suite. Mobile communication system passing through these different geographic regions having networks that implement different protocol suites, may be equipped to communicate through networks implementing the different protocol suites. However, when a communication system switches between different networks, the difference in protocol suites can affect the execution of the applications on the communication system.

### SUMMARY

Systems and methods for a dialog service interface switch are provided. In at least one embodiment, a system comprises a plurality of networks configured to enable communication transmissions from the mobile communication system to an end node, wherein at least two networks of the plurality of networks transports information through different protocol stacks that implement different protocol suites and a dialog service interface switch coupled to the plurality of networks. The system also comprises an application interface coupled to the dialog service interface switch, wherein the dialog service interface switch comprises a network selector that determines a network of the plurality of networks through which the mobile communication system will communicate and switches between different networks of the plurality of networks, wherein the application interface provides data to at least one application, executing in the application layer, in the same format for each network of the plurality of networks.

### DRAWINGS

Understanding that the drawings depict only exemplary embodiments and are not therefore to be considered limiting in scope, the exemplary embodiments will be described with additional specificity and detail through the use of the accompanying drawings, in which:

Figure 1 is a block diagram illustrating a dialog service interface (DSI) switch that interfaces an application with different protocol stacks according to one embodiment;

Figure 2 is a diagram of an aircraft traveling through different communication regions according to one embodiment;

Figure 3 is a block diagram of a DSI switch according to one embodiment;

Figure 4 is a state diagram illustrating the selection of a network by a DSI switch according to one embodiment; and

Figures 5 is a flow diagram of a method for network switching according to one embodiment.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

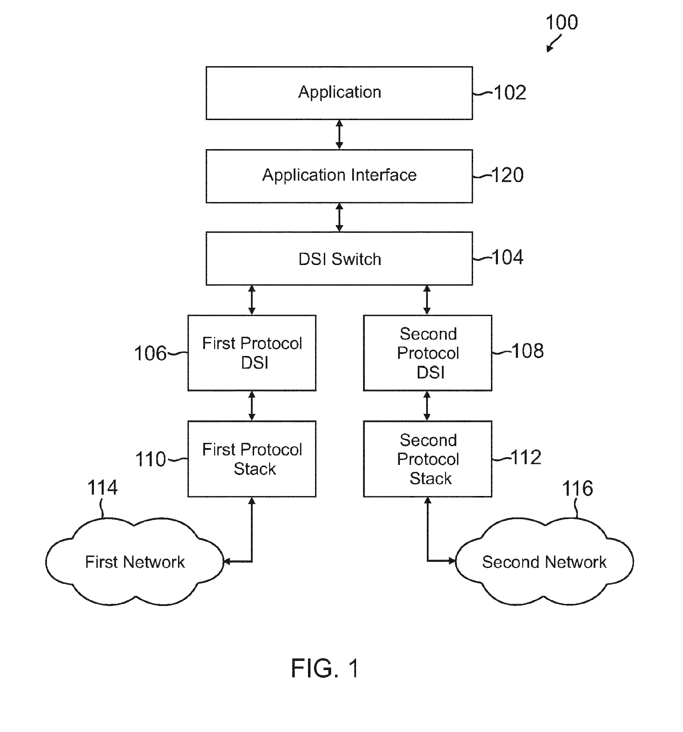

Figure 1 is a block diagram of a multiple protocol stacks 100 for a communication system, where the communication system can communicate through networks 114 and 116 that implement different network protocol suites. The term protocol suite, as used herein refers to a model that describes networking protocols for communicating between different nodes in a network. The term protocol stack, as used herein, refers to the implementation of the different layers of a protocol suite in a communication system. In certain embodiments, a communication system is mounted on a mobile platform or is portable. When the communication system is on a mobile platform or portable, the communication system travels through different geographic regions. In certain implementations, communication equipment in the different geographic regions provide network communications that use protocol stacks that implement different protocol suites. For example, each protocol stack in the multiple protocol stack 100 can implement the various layers in a different protocol suite. The protocol suites implemented by multiple protocol stacks 100 can include at least one of the Aeronautical Telecommunications Network (ATN) communications protocol suite, which uses the Open Systems Interconnection (OSI) seven-layer reference model, the Transmission Control Protocol/Internet Protocol (TCP/IP) protocol suite, and the like. When the communication system moves from a first region having a first network that implements a first protocol suite to a second region having a second network that implements a second protocol suite, the communication system switches between the different protocol stacks in multiple protocol stacks 100 in such a way that communications through the different protocol stacks are handled identically by an application executing on the communication system.

In certain exemplary embodiments, the multiple protocol stacks 100 communicates through a first protocol stack 110 and a second protocol stack 112. For example, the first protocol stack 110 can be designed to communicate through a first network 114 and implements the layers described in the ATN/OSI protocol suite, while the second protocol stack 112 is designed to communicate through a second network 116 that implements the layers described in the TCP/IP protocol suite. As is known by one having skill in the art, the ATN/OSI protocol suite describes seven layers. The seven layers of the ATN/OSI protocol suite include an application, presentation, session, transport, network, data-link, and physical layers. In contrast, the TCP/IP protocol suite includes four layers, which layers are denoted as application, transport, network, and network interface layers. The application layer of the TCP/IP protocol corresponds to the combination of the application, presentation, and session layers of the OSI model. The transport layer of the TCP/IP protocol corresponds to the transport layer of the OSI model. The network layer of the TCP/IP protocol corresponds to the network layer of the OSI model. The network interface layer of the TCP/IP protocol provides access to the functions that correspond to the data-link and physical layers of the OSI model, which are not included in the TCP/IP protocol suite.

To facilitate communications between the executing application 102 and the first protocol stack 110 and the second protocol stack 112, the multiple protocol stacks 100 includes a first protocol dialog service interface (DSI) 106 and a second protocol DSI 108. The first protocol DSI 106 and the second protocol DSI 108 control connections between the application 102 and remote applications executing on end nodes of a communication link. When the protocol stack includes the layers described in the OSI protocol suite, the DSI is a service interface between the application layer and the presentation layer.

To control which protocol stack in the multiple protocol stacks 100 is used for communicating between two end nodes, the multiple protocol stack 100 includes an application interface 120 and a DSI switch 104. The DSI switch 104 determines which network will be used for communication and switches the communications of the application 102 to communicate through the appropriate protocol DSI that corresponds to the appropriate protocol stack for that network. In certain embodiments, the protocol stacks are part of the same equipment. Alternatively, the protocol stacks can be located in different equipment. Further, when the DSI switch 104 switches between networks implementing different protocol stacks, application interface 120 provides an interface between the executing application 102 and the different protocol stacks such that communications through the different protocol stacks are presented to application 102 in the same format. For example, if the communication system is communicating through a first protocol stack 110 and the communication link through the first protocol stack 110 becomes unavailable, the DSI switch 104 will switch the communications from the application 102 to communicate through the second protocol stack 112 when a communication link through the second protocol stack is available. Further, the application interface 120 and the DSI switch 104 switch to different protocol suites in a way that the application 102 is unable to determine that a switch between networks has occurred. For example, when the DSI switch 104 has set the communication system to communicate through the first protocol stack 110 and then switches the communication system, such that the communication system communicates through the second protocol stack 112, the DSI switch 104 and the application interface 120 control the data that is sent to the application 102 such that the data will appear in the same communication format whether it is communicated through the first network or the second network.

In certain embodiments, the communication system is part of an airborne communication system that is used for aircraft communications between an aircraft and an air traffic controller. For example, the communication system communicates with an air traffic controller through the Aeronautical Telecommunication Network (ATN). Further, the application 102 supports controller pilot data link communications (CPDLC), Context Manager (CM) and the like. As the aircraft travels from its point of origin to its destination, the aircraft passes through multiple geographic regions through which the application 102 establishes communications sessions with multiple air traffic service units (ATSU). However, the networks through which the different ATSUs communicate may use protocol stacks that implement different protocol suites. For example, ATSUs within the different geographic regions may have equipment that implements different combinations of both the ATN/OSI protocol suite and the TCP/IP protocol suite.

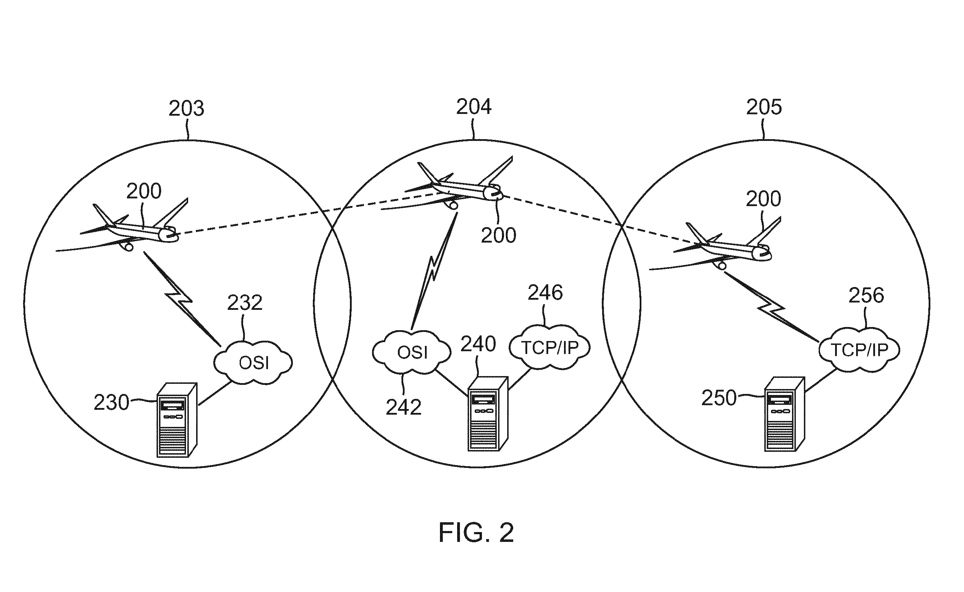

Figure 2 is a diagram illustrating an aircraft 200 passing through different geographic regions where each geographic region is associated with an ATSU that provides support for a network that implements either the ATN/OSI protocol suite or the TCP/IP protocol suite. As shown, aircraft 200 passes through a first geographic region 203, a second geographic region 204, and a third geographic region 205. The first ATSU 230 for the first geographic region 203 includes equipment that implements an ATN/OSI protocol stack 232. As such the aircraft 200 establishes a communication link with the ATSU 230 for the first geographic region 203 by communicating according to the ATN/OSI protocol suite.

Further, as the aircraft 200 travels through the different geographic regions, the aircraft 200 may leave the first geographic region 203 and enter the second geographic region 204. When the aircraft leaves the first geographic region 203, which is associated with the first ATSU 203, the aircraft 200 enters the second geographic region 204 that is associated with a second ATSU 240. The second ATSU 240 is equipped to communicate with aircraft 200 through equipment that implements either an ATN/OSI protocol stack 242 or a TCP/IP protocol stack 246. Further, when the aircraft 200 leaves the second geographic region 204, which is associated with the second ATSU 240, the aircraft 200 enters the third geographic region 205, which is associated with a third ATSU 250. The third ATSU 250 is equipped to communicate with aircraft 200 through equipment that implements a TCP/IP protocol stack 256.

In at least one implementation, when the aircraft 200 travels from one geographic region to another geographic region, where the ATSUs in the different geographic regions implement different protocol stacks that implement different protocol suites, the communication system on the aircraft 200 includes a DSI switch to switch the networking protocols through which a communication system is communicating on the aircraft such that an application executing on a communication system in the aircraft 200 is unable to determine that a switch between networks implementing different protocol suites has occurred and the switchover occurs seamlessly, in that there is no or little degradation in quality of communications service during the switchover. In an alternative embodiment, in contrast to the implementation where an aircraft travels through different geographic regions that implement different protocol stacks, an ATSU can function similarly to the aircraft communication system. In particular the communication system for the ATSU can implement a DSI switch when communicating through different protocol stacks.

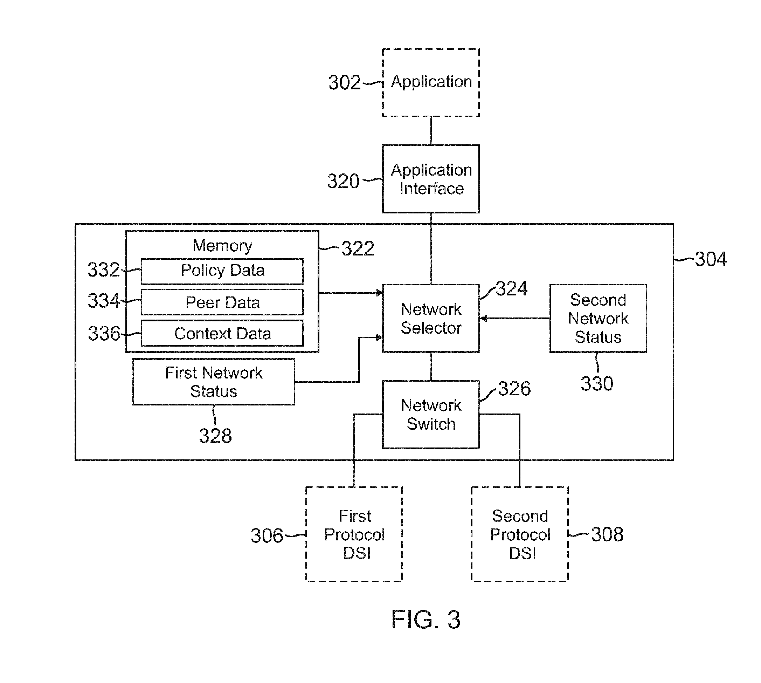

Figure 3 is a block diagram illustrating a DSI switch 304. In certain embodiments, DSI switch 304 is an embodiment of DSI switch 104 in Figure 1. DSI switch 304 is coupled to an application interface 320, which is in turn coupled to computing hardware that executes an application 302. Alternatively, the DSI switch 304, the application interface 320, is part of the same hardware that executes application 302. In at least one implementation, application 302 is an embodiment of application 102 and includes applications such as CM, CPDLC, and other applications that are supported by the application layer of a protocol stack. Further, application interface 320 is an embodiment of application interface 120 and provides an interface between the application layer and multiple protocol stacks that allows the DSI switch 304 to switch the communication link from using with a network implementing one protocol suite to a network that implements a different protocol suite such that an application executing in the application layer is unaware that a network switch has taken place. In at least one embodiment, the application interface 320 is part of the DSI switch 304.

In at least one implementation, DSI switch 304 also includes a network selector 324. Network selector 324 receives input data and determines which communication network will be used to communicate information between application 302 and other destination applications executing on end nodes of a communication link. In certain embodiments, network selector 324 executes on a processor and receives input data from information stored in a memory 322. Memory 322 typically stores information on any appropriate computer readable medium used for storage of computer readable instructions or data structures. The computer readable medium can be implemented as any available media that can be accessed by a general purpose or special purpose computer or processor, or any programmable logic device. Suitable processor-readable media may include storage or memory media such as magnetic or optical media. For example, storage or memory media may include conventional hard disks, Compact Disk - Read Only Memory (CD-ROM), volatile or non-volatile media such as Random Access Memory (RAM) (including, but not limited to, Synchronous Dynamic Random Access Memory (SDRAM), Double Data Rate (DDR) RAM, RAMBUS Dynamic RAM (RDRAM), Static RAM (SRAM), etc.), Read Only Memory (ROM), Electrically Erasable Programmable ROM (EEPROM), and flash memory, etc. Suitable processor-readable media may also include transmission media such as electrical, electromagnetic, or digital signals, conveyed via a communication medium such as a network and/or a wireless link.

In further embodiments, the information stored in memory 322 includes policy data 332. Policy data 332 is information stored in memory 322 that is configured to store information that network selector 324 consults to determine network priority when selecting between two networks that implement different protocol suites. For example, when network selector 324 is determining the network through which to establish a communication link, the network selector 324 consults data in policy data 332 and identifies a preferred network. If the preferred network is available, the network selector 324 selects the preferred network for the establishment of the communication link. If the preferred network is not available, the network selector 324 selects the available network that is next in a list of preferred networks according to the data stored in policy data 332. In one exemplary implementation, policy data 332 includes data about costs of communicating through a link, service level agreements, link quality, and the like. In an alternative implementation, network selector 324 selects a network based on the protocol suite implemented by the network.

In certain embodiments, the information stored in memory 322 includes peer data 334. Peer data 334 is configured to store information describing available end nodes that are needed to establish a communication link through a network. For example, information needed to establish a communication link includes ATN addresses, IP addresses mapped to ICAO addresses of the end nodes, and the like. In a further embodiment, the information stored in memory 322 includes context data 336. Context data 336 is configured to store information describing the context of all established connections. For example, context data indicates whether a network connection exists between an ATSU or other end node. When a connections drops, the network selector 324 uses the data in context data 336 to establish a connection through the available network with the end node.

In at least one embodiment, to aid network selector 324 in determining the network through which to establish a connection, the network selector 324 receives first network status 328 and second network status 330. First network status 328 and second network status 330 are network status indicators that provide indications of the availability and current status of link quality of both a first network and a second network. In certain embodiments, where there are more networks, network selector 324 receives status describing the availability of each network. As described above, network selector 324 selects a network by determining which networks are available through first network status 328 and second network status 330 and by consulting data stored in memory 322, such as data stored in policy data 332. When a network is selected, network selector 324 uses information stored in peer data 334 and context data 336 to establish a connection or switch to a new connection in the event that a present connection terminates. In certain implementations, when a present connection is about to terminate, network selector 324 selects a new network for communication before the present connection terminates.

In certain embodiments, DSI switch 304 also includes a network switch 326. Network switch 326 receives the network selection from network selector 324 and switches the communications to the selected network. In at least one implementation, network switch 326 is coupled to a first protocol DSI 306 and a second protocol DSI 308. When the network switch 326 receives the network determination from network selector 324, the network switch 326 connects to the protocol DSI associated with the selected network. For example, when the network selector 324 selects the first network, the network switch 326 connects to the first protocol DSI 306. When the network selector 324 selects the second network, the network switch 326 connects to the second protocol DSI 308. The first protocol DSI 306 and the second protocol DSI 308 communicate through the respective protocol stacks of their associated networks. Connections via both protocol stacks may be maintained during switchover to facilitate a seamless make before break transition between the protocol stacks.

In certain embodiments, the DSI switch 304 provides a seamless user experience to pilots irrespective of the transition between networks. Also, the DSI switch 304 provides a single common interface 320 to an application 302 irrespective of multiple underlying interfaces to different protocol stacks. Further, the DSI switch 304 allows a system to periodically keep track of the status of networks and switch over to a different network in the event of a network failure.

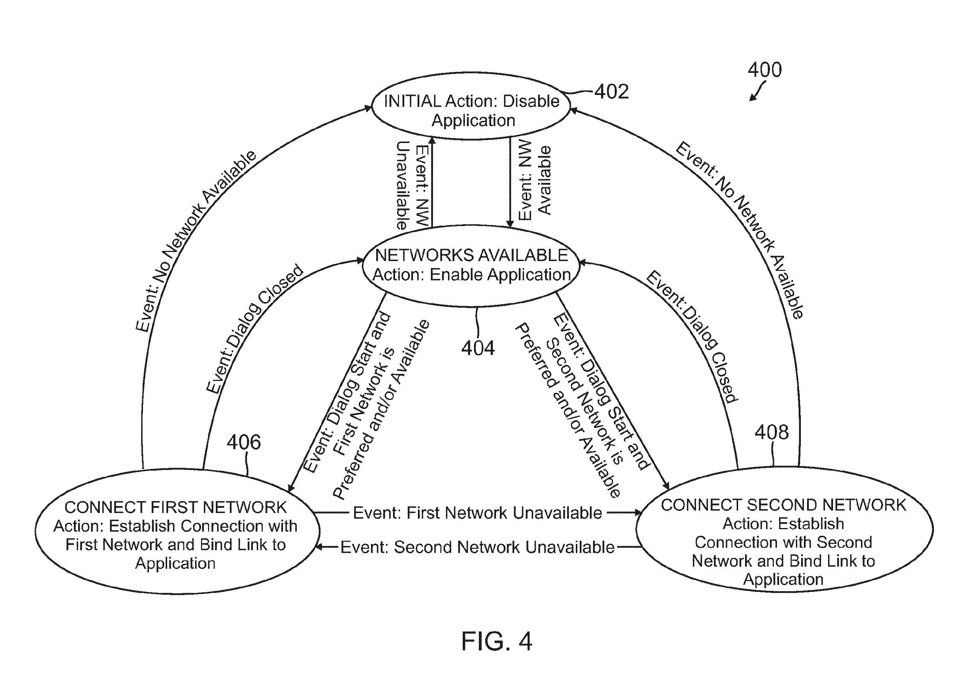

Figure 4 is a state diagram 400 illustrating the selection of a network by a DSI switch, such as DSI switch 304 in Figure 3. As shown in state diagram 400, a DSI switch has an initial state 402. At the initial state 402, applications that communicate through the networks are disabled. Also, there are no networks available. In the event that one or more networks becomes available, as indicated through the network status such as first network status 328 and second network status 330 in Figure 3, the DSI switch transitions from the initial state 402 to the networks available state 404. At the networks available state 404 applications that communicate through the networks are enabled. After transitioning to the networks available state 404, if the networks become unavailable, the DSI switch transitions back to the initial state 402 and disables enabled applications.

Further, when the dialog starts between the application and an end node, a network selector in the DSI switch determines which network is available and switches the communication system to communicate through the available network. In a further embodiment, when there is more than one available network, the network selector identifies a preferred network based on data contained in a policy data. For example, if the data stored in the policy data indicates a preference for a first of two networks or the first network is the only network available, the DSI switch transitions to connect first network state 406. In connect first network state 406, the DSI switch establishes a connection through the first network and binds the application to the communication link through the first network. Conversely, if the data stored in the policy data indicates a preference for a second of two networks or the second network is the only network available, the DSI switch transitions to connect second network state 408. In connect second network state 408, the DSI switch establishes a connection through the second network and binds the application to the communication link through the second network. In an alternative embodiment, the policy data includes a fixed definition that guides the network selector when determining the which network to select.

In at least one embodiment, when a communication link has been established through the first network, and the communication link through the first network becomes unavailable, the DSI switch will transition to connect second network state 408 when a communication link through the second network is available. However, if there is no communication link through the second network, the DSI switch transitions to the initial state 402, where the application is disabled. Alternatively, when a communication link has been established through the second network, and the communication link through the second network becomes unavailable, the DSI switch will transition to connect first network state 406 when a communication link through the first network is available. However, if there is no communication link through the second network, the DSI switch transitions to the initial state 402, where the application is disabled. When the DSI switch transitions to the initial state 402, the DSI switch waits for a network to become available before establishing another communication link. As shown in Figure 4, the DSI switch is able to transition between a first and second network. The transitioning between the first and second network is illustrative as the DSI switch is able to transition between more than two networks.

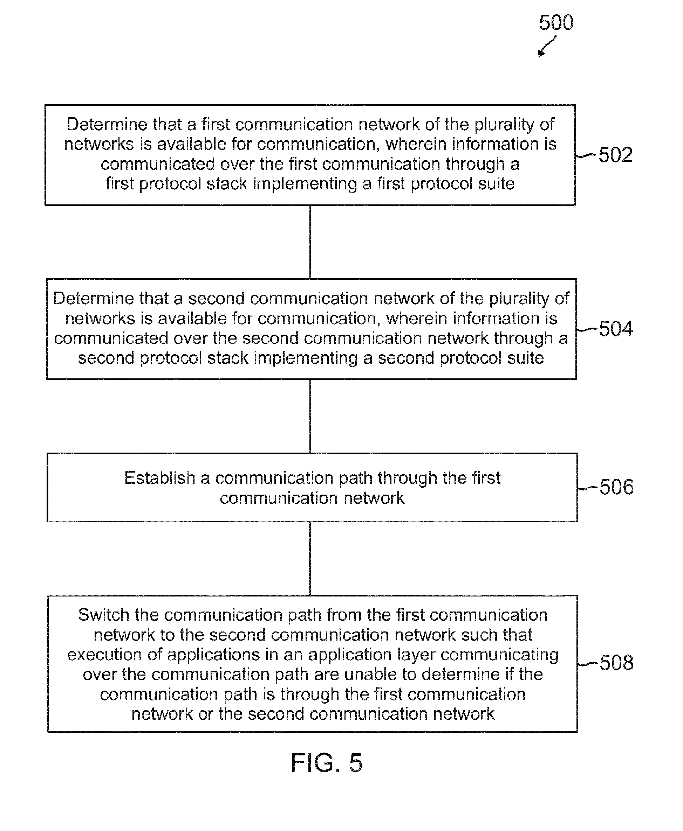

Figure 5 is a flow diagram illustrating an exemplary method 500 for network switching. Exemplary method 500 begins at block 502, where it is determined whether a first communication network in the plurality of networks is available for communication, wherein information is communicated over the first communication through a first protocol stack implementing a first protocol suite. Exemplary method 500 proceeds to block 504, where it is determined whether a second communication network in the plurality of networks is available for communication, wherein information is communicated over the second communication network through a second protocol stack implementing a second protocol suite. For example, a DSI switch 304 in Figure 3 receives a first network status 328 and a second network status 330, where both the first network status 328 and the second network status 330 indicate whether a first or second network is available for communication. Further, data is communicated over the first network and the second network using different protocol stacks. In at least one exemplary implementation, data is communicated over the first network using a protocol stack that implements the ATN/OSI protocol suite, where data is communicated over the second network using a protocol stack that implements the TCP/IP protocol suite.

In certain embodiments, exemplary method 500 proceeds to block 506, where a communication path is established through the first communication network. For example, DSI switch 304 uses data stored in memory to select between a first communication network and a second communication network. In at least one embodiment, the memory includes policy data 332, peer data 334, and context data 336. The DSI switch 304 uses policy data 332 to select the network, and peer data 334 and context data 336 to establish a connection through the network. Further, when the communication path is established through the first communication network, the DSI switch 304 binds or associates the execution of an application executing in an application layer to the transmission of data over the first communication network.

In at least one embodiment, the exemplary method 500 proceeds to block 508, where the communication path from the first communication network to the second communication network is switched such that execution of applications in an application layer communicating over the communication path are unable to determine if the communication path is through the first communication network or the second communication network. For example, when the first communication network is about to terminate or become otherwise unavailable, and a second communication network is available and connected, the DSI switch 304 switches the communication path from the first communication network to the second communication network. Conversely, if the communication path had been established through the second communication network and the second communication has or is about to become unavailable, the DSI switch 304 switches the communication path from the second communication network to the first communication network. Further, applications executing in the application layer are unable to determine when communications switch between the first and second networks.

### Example Embodiments

Example 1 includes a communication system, the system comprising: a plurality of networks configured to enable communication transmissions from the communication system to an end node, wherein at least two networks of the plurality of networks transports information through different protocol stacks that implement different protocol suites; a dialog service interface switch coupled to the plurality of networks; and an application interface coupled to the dialog service interface switch, wherein the dialog service interface switch comprises a network selector that determines a network of the plurality of networks through which the communication system will communicate and switches between different networks of the plurality of networks, wherein the application interface provides data to at least one application, executing in the application layer, in the same format for each network of the plurality of networks.

Example 2 includes the system of Example 1, wherein the different protocol stacks implement at least one of: a transmission control protocol/ internet protocol suite; and an aeronautical telecommunications network open systems interconnection protocol suite.

Example 3 includes the system of any of Examples 1-2, wherein the dialog service interface switch comprises a memory unit configured to store policy data, wherein the network selector uses the policy data to determine the network through which the communication system will communicate.

Example 4 includes the system of Example 3, wherein the memory unit further stores a peer data, wherein the peer data describes available end nodes for the plurality of networks.

Example 5 includes the system of any of Examples 3-4, wherein the memory unit further stores a context data, wherein the context data stores the context of established connections with end nodes through the plurality of networks.

Example 6 includes the system of any of Examples 1-5, wherein the at least one application is an ATN application.

Example 7 includes the system of any of Examples 1-6, wherein the dialog service interface switch is coupled to interfaces of all protocol suites implemented in the system for the plurality of networks.

Example 8 includes an aircraft communication system, the system comprising: a plurality of networks configured to enable communication transmissions from the aircraft communication system over a plurality of networks, wherein at least two networks of the plurality of networks implement different protocol suites; a dialog service interface switch coupled to the plurality of networks, wherein the dialog service interface switch determines a network of the plurality of networks through which the aircraft communication system communicates; and an application interface coupled to the dialog service interface switch, wherein the dialog service interface switch controls switching between different networks of the plurality of networks, wherein the execution of at least one application executing in the application layer is unaware that the switching occurred.

Example 9 includes the aircraft communication system of Example 8, wherein the dialog service interface switch comprises: a network selector configured to select the network of the plurality of networks through which the aircraft communication system communicates; a plurality of network status indicators coupled to the network selector, wherein the plurality of network status indicators is configured to indicate whether the different networks are available for communication; a memory unit coupled to the network selector, wherein the network selector uses data stored in the memory unit to select the network through which the aircraft communication system communicates; and a network switch coupled to the network selector, wherein the network switch is configured to switch between the different networks based on the network selected by the network selector.

Example 10 includes the aircraft communication system of Example 9, wherein the data stored in the memory unit comprises at least one of: policy data configured to store data used by the network selector to determine the network through which the mobile communication system will communicate; context data configured to store data describing the context of established connections with end nodes through the plurality of networks; peer data configured to store data describing available end nodes for the plurality of networks; and a fixed definition that directs the network selector when determining the network.

Example 11 includes the aircraft communication system of any of Examples 9-10, wherein the network switch is coupled to a different dialog service interface for each network of the plurality of networks.

Example 12 includes the aircraft communication system of any of Examples 8-11, wherein the aircraft communication system communicates with an air traffic service unit.

Example 13 includes a method for seamless switching for communication over a plurality of networks, the method comprising: determining that a first communication network of the plurality of networks is available for communication, wherein information is communicated over the first communication network through a first protocol stack implementing a first protocol suite; determining that a second communication network of the plurality of networks is available for communication, wherein information is communicated over the second communication network through a second protocol stack implementing a second protocol suite; establishing a communication path through the first communication network; and switching the communication path, in a dialog service interface switch, from the first communication network to the second communication network such that execution of applications in an application layer communicating over the communication path are unable to determine if the communication path is through the first communication network or the second communication network, wherein the switch from the first communication network to the second communication network does not degrade communication service.

Example 14 includes the method of Example 13, further comprising determining, by the dialog service interface switch, whether to establish the communication path through one of the first communication network and the second communication network.

Example 15 includes the method of Example 14, wherein the dialog service interface switch determines whether to establish the communication path through one of the first communication network and the second communication network based on policy data.

Example 16 includes the method of any of Examples 13-15, wherein the first protocol suite and the second protocol suite are at least one of: a transmission control protocol/ internet protocol suite; and an aeronautical telecommunications network open systems interconnection protocol suite.

Example 17 includes the method of any of Examples 13-16, wherein the dialog service interface switch is coupled to a first dialog service interface for the first protocol stack and a second dialog service interface for the second protocol stack.

Example 18 includes the method of any of Examples 13-17, wherein the applications are ATN applications.

Example 19 includes the method of any of Examples 13-18, further comprising disabling the applications when the first communication network and the second communication network become unavailable.

Example 20 includes the method of any of Examples 13-19, wherein establishing a communication path through the first communication network comprises binding the applications to the communication path.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A communication system, the system comprising:
a plurality of networks configured to enable communication transmissions from the communication system to an end node, wherein at least two networks of the plurality of networks transports information through different protocol stacks that implement different protocol suites;
a dialog service interface switch (104) coupled to the plurality of networks; and
an application interface (120) coupled to the dialog service interface switch (104), wherein the dialog service interface switch (104) comprises a network selector (324) that determines a network of the plurality of networks through which the communication system will communicate and switches between different networks of the plurality of networks, wherein the application interface (120) provides data to at least one application, executing in the application layer, in the same format for each network of the plurality of networks.

2. The system of claim 1, wherein the different protocol stacks implement at least one of:
a transmission control protocol/ internet protocol suite; and
an aeronautical telecommunications network open systems interconnection protocol suite.

3. The system of claim 1, wherein the dialog service interface switch (104) comprises a memory unit (322) configured to store policy data (332), wherein the network selector (324) uses the policy data (332) to determine the network through which the communication system will communicate.

4. The system of claim 3, wherein the memory unit (322) further stores a peer data (334), wherein the peer data (334) describes available end nodes for the plurality of networks.

5. The system of claim 3, wherein the memory unit (322) further stores a context data (336), wherein the context data (336) stores the context of established connections with end nodes through the plurality of networks.

6. The system of claim 1, wherein the dialog service interface switch (104) is coupled to interfaces of all protocol suites implemented in the system for the plurality of networks.

7. A method for seamless switching for communication over a plurality of networks, the method comprising:
determining that a first communication network of the plurality of networks is available for communication, wherein information is communicated over the first communication network through a first protocol stack implementing a first protocol suite;
determining that a second communication network of the plurality of networks is available for communication, wherein information is communicated over the second communication network through a second protocol stack implementing a second protocol suite;
establishing a communication path through the first communication network; and
switching the communication path, in a dialog service interface switch (104), from the first communication network to the second communication network such that execution of applications in an application layer communicating over the communication path are unable to determine if the communication path is through the first communication network or the second communication network, wherein the switch from the first communication network to the second communication network does not degrade communication service.

8. The method of claim 7, further comprising determining, by the dialog service interface switch (104), whether to establish the communication path through one of the first communication network and the second communication network.

9. The method of claim 8, wherein the dialog service interface switch (104) determines whether to establish the communication path through one of the first communication network and the second communication network based on policy data (332).

10. The method of claim 7, wherein the first protocol suite and the second protocol suite are at least one of:
a transmission control protocol/ internet protocol suite; and
an aeronautical telecommunications network open systems interconnection protocol suite.
